Europäisches Patentamt

European Patent Office

Office européen des brevets

(11) Veröffentlichungsnummer: **0 303 131**
**A1**

# (12) EUROPÄISCHE PATENTANMELDUNG

(21) Anmeldenummer: 88112405.1

(22) Anmeldetag: 30.07.88

(51) Int. Cl.4: **A47J 31/40 , A47J 31/54**

(30) Priorität: **14.08.87 CH 3144/87**

(43) Veröffentlichungstag der Anmeldung:
**15.02.89 Patentblatt 89/07**

(84) Benannte Vertragsstaaten:
**AT BE CH DE ES FR GB IT LI NL SE**

(71) Anmelder: **Turmix AG**
**Buechstrasse 20**
**CH-8645 Jona(CH)**

(72) Erfinder: **Vetterli, Heinz A.**
**Hinterhofstrasse 24**
**CH-8808 Pfäffikon(CH)**
Erfinder: **Frisch, Martin**
**Kronenwiese 41**
**CH-8864 Reichenburg(CH)**

(74) Vertreter: **Scheidegger, Zwicky, Werner & Co.**
**Stampfenbachstrasse 48 Postfach**
**CH-8023 Zürich(CH)**

(54) **Heizeinrichtung für Kaffeemaschinen.**

(57) Die Heizeinrichtung besteht aus dem eigentlichen Heizelement (1), einem Befestigungsfuss (2) und einem in letzteren integrierten Durchflussmesser (8,9), wobei letzterer mit dem Fuss (2) einteilig ausgebildet ist. Der Deckel für das Gehäuse (8) des Durchflussmessers wird vom Heizelement (1) gebildet.

Fig. 1

EP 0 303 131 A1

## Heizeinrichtung für Kaffeemaschinen

Die vorliegende Erfindung betrifft eine Heizeinrichtung zur Zubereitung von Heisswasser für Kaffeemaschinen, mit einem plattenförmigen Heizelement mit Durchführungen für Heizdrähte und für aufzuheizendes Wasser, einem Fuss zur Befestigung des plattenförmigen Heizelementes und einem Durchflussmesser für das Wasser.

Bei derartigen Heizeinrichtungen, welche üblicherweise als Thermoblock bezeichnet werden, wird das Wasser durch spiralförmig im plattenförmigen Heizelement angeordnete Durchführungen geleitet und dabei durch den aufgeheizten Plattenkörper erhitzt. Die elektrischen Widerstands-Heizdrähte sind dabei in separaten Durchgängen durch den Plattenkörper geführt. Das ganze bildet so einen Durchlauferhitzer (es sind auch Heizeinrichtungen bekannt, bei welchen das Wasser mittels Heizstäben in einem Reservoir direkt erhitzt wird).

Um die erforderlichen Wasserportionen zu bestimmen, wird das Wasser in der Regel vor oder nach dem Heizelement durch einen Durchflussmesser geführt, dessen Messwerte zur Steuerung der Ventile verwendet werden.

Bisher wurden die Durchflussmesser, üblicherweise sog. Flügelrad-Durchflussmesser, an irgendeiner passenden Stelle in der Kaffeemaschine untergebracht. Dazu wurde ein passendes Gehäuse mit Deckel und Wasserzu- und -abflussleitungen benötigt, was selbstverständlich einen wesentlichen Aufwand an Herstellungswerkzeugen bedeutete.

Aufgabe der vorliegenden Erfindung war es nun, die Heizeinrichtung für eine Kaffeemaschine so zu gestalten, dass einerseits die eigentlichen Herstellungskosten vermindert werden können und andererseits die Anordnung des Durchflussmessers optimiert werden kann.

Diese Aufgabe wird erfindungsgemäss bei einer Heizeinrichtung der eingangs beschriebenen Art dadurch gelöst, dass im Befestigungsfuss das Gehäuse für den Durchflussmesser integriert ist, wobei Fuss und Durchflussmesser-Gehäuse einteilig ausgebildet sind.

Bei einer besonders vorteilhaften Ausführungsform des Erfindungsgegenstandes, welcher mit einem Flügelrad-Durchflussmesser ausgerüstet ist, besteht die Konstruktion darin, dass das Durchflussmesser-Gehäuse als stehender Zylinder mit einer seitlichen, im wesentlichen tangentialen Wasserzuführung ausgebildet ist, dessen zum Einsetzen des Messflügels offene Oberseite im montierten Zustand durch das plattenförmige Heizelement verschlossen ist und das zur Wegfuhr der abgemessenen Wassermenge am Boden des Durchflussmesser-Gehäuses eine Abflussleitung vorgesehen ist.

Diese Bauart erweist sich als besonders wirtschaftlich, da damit ein Minimum an Werkzeugen benötigt wird (praktisch nur für das plattenförmige Heizelement, den Befestigungsfuss und den Messflügel). Die separaten Gehäuseteile für den Durchflussmesser entfallen. Ausserdem erlaubt diese Konstruktion, den Durchflussmesser optimal zwischen dem eigentlichen Heizelement und der Filtervorrichtung anzuordnen, was nur sehr kurze Strecken zwischen Heizelement und Filter bedingt.

Die Erfindung wird nachstehend anhand eines in der Zeichnung dargestellten Ausführungsbeispieles noch etwas näher erläutert. Es zeigt:

Fig. 1 ein Heizelement mit Befestigungsfuss in schematischer, perspektivischer Darstellung;

Fig. 2 eine Draufsicht auf einen Befestigungsfuss, und

Fig. 3 einen Schnitt entlang der Linie I-I durch den Befestigungsfuss von Fig. 1.

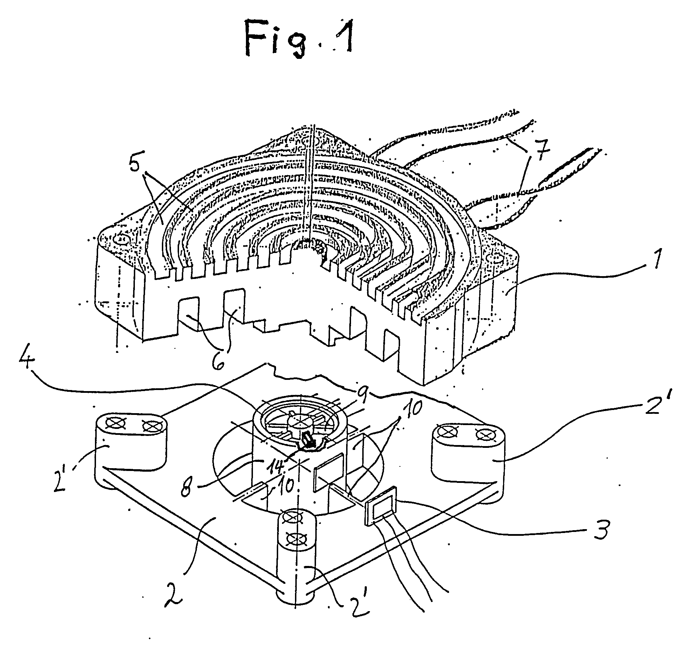

Fig. 1 der Zeichnung zeigt eine erfindungsgemäss ausgestaltete Heizeinrichtung zur Zubereitung von Heisswasser im Durchlaufverfahren für Kaffeemaschinen, insbesondere für Haushaltkaffeemaschinen. Die Einrichtung, die zum Einbau in eine Kaffeemaschine vorgesehen ist, besteht aus einem an sich bekannten plattenförmigen Heizelement 1, welches auf seiner Oberseite spiralförmig angeordnete Kanäle 5 zum Durchführen von Wasser aufweist (diese werden von einem nicht dargestellten Deckel verschlossen), während auf der Unterseite Durchführungen 6 für Heizdrähte 7 (elektrische Widerstandsheizdrähte) vorgesehen sind. Das Heizelement 1 ist dafür vorgesehen, auf einem Befestigungsfuss 2 montiert zu werden. Die Befestigung erfolgt mittels Schrauben auf Erhebungen 2′ des Befestigungsfusses 2. Dieser Fuss 2 wird seinerseits am Gestell einer Kaffeemaschine festgeschraubt.

Im Zentrum des Fusses 2 ist das Gehäuse 8 für einen Flügelrad-Durchflussmesser mit eingesetztem Flügelrad 9 angeordnet, in dessen Flügeln (z.B. in zwei sich diametral gegenüberliegenden Flügelenden) die Magnetchen 14 zur Ansteuerung einer Hall-Sonde 3 integriert sind. Das Gehäuse 8 ist einteilig mit dem übrigen Fuss ausgebildet (z.B. aus Kunststoff gespritzt) und ist über Arme 10 mit dem Fuss 2 verbunden. Die Messresultate werden über eine Hall-Sonde 3 an eine Steuereinrichtung (nicht dargestellt) zwecks passender Betätigung von Ventilen weitergeleitet.

Das zylindrische Gehäuse 8 ist zum Einsetzen oder Auswechseln des Messflügels 9 oben offen und wird im montierten Zustand von der Unterseite des Heizelementes 1 verschlossen.

Das erhitzte Wasser wird von einer Pumpe durch die Kanäle 5 des Heizelementes 1 gepumpt, dabei vom heissen Heizelement 1 im Durchlaufverfahren erhitzt und über eine passende Zuleitung etwa tangential in den Durchflussmesser 8,9 geführt, um von dort nach unten möglichst direkt durch eine Filtervorrichtung geführt zu werden, um den Kaffee aufzubrühen.

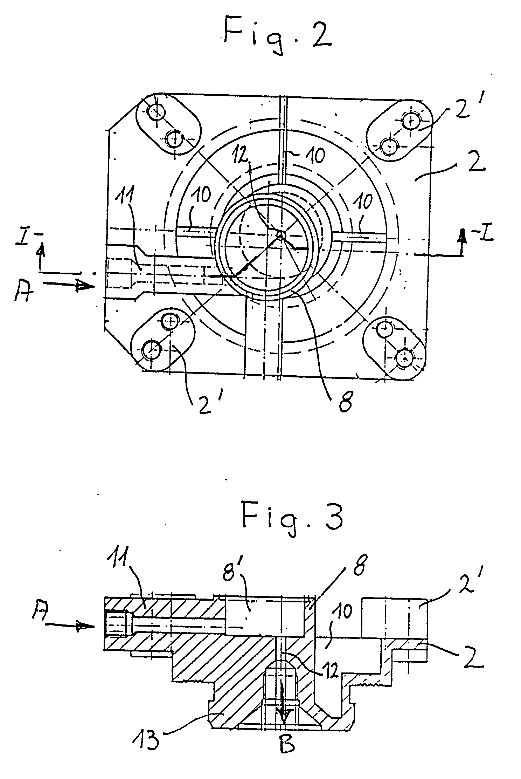

Aus Fig. 2 ist eine praktische Konstruktion eines Befestigungsfusses mit integriertem Durchflussmesser ersichtlich. Das Heisswasser wird aus Richtung A etwa tangential in den Durchflussmesser geführt, um dann nach unten in Richtung B durch eine Filtervorrichtung weiterzufliessen (unter Druck).

Der Befestigungsfuss 2 ist plattenförmig ausgebildet und weist mit Gewindebohrungen versehene Erhebungen 2' auf. Diese dienen der Befestigung des Heizelementes 1 am Fuss 2 und der Befestigung des Fusses 2 am Maschinengestell. Im Zentrum ist das Gehäuse 8 für den Durchflussmesser angeordnet und über die Arme 10 mit dem Rest des Befestigungsfusses 2 verbunden. Im oberen Teil 8' des Gehäuses 8 wird der Messflügel 9 angeordnet, und das zu messende Wasser über eine Zuleitung 11 etwa tangential zum Messflügel 9 geführt. Durch eine am Boden des zylindrischen Gehäuses 8 vorgesehene Abflussleitung 12 gelangt das Wasser schliesslich durch die Filtervorrichtung (nicht dargestellt), welche z.B. mittels Bajonettverschluss von unten über dem nach unten ragenden Stutzen 13 lösbar angeordnet werden kann.

Dank dieser Konstruktion besteht die Heizeinrichtung lediglich aus dem eigentlichen Heizelement 1 und dem Befestigungsfuss 2, welcher gleichzeitig das Gehäuse 8 für den Durchflussmesser aufweist und den Stutzen 13 zur Befestigung des Filters bildet. Es wird lediglich noch ein Messflügel zum Einsetzen in das Gehäuse, ein Deckel für das Heizelement und eine Leitung zum Zuführen des Wassers vom Heizelement in den Fuss benötigt. Dank dieser einfachen, ausserordentlich funktionellen Bauweise, können wesentliche werkzeugseitige Einsparungen gemacht werden und dazu erst noch die Elemente in optimaler Weise bei minimalem Montageaufwand angeordnet werden.

**Ansprüche**

1. Heizeinrichtung zur Zubereitung von Heisswasser für Kaffeemaschinen, mit einem plattenförmigen Heizelement mit Durchführungen für Heizdrähte und für aufzuheizendes Wasser, einem Fuss zur Befestigung des plattenförmigen Heizelementes und einem Durchflussmesser für das Wasser, dadurch gekennzeichnet, dass im Befestigungsfuss das Gehäuse für den Durchflussmesser integriert ist.

2. Heizeinrichtung nach Anspruch 1, dadurch gekennzeichnet, dass der Befestigungsfuss des Heizelementes und das Durchflussmesser-Gehäuse einteilig ausgebildet sind.

3. Heizeinrichtung nach Anspruch 1 oder 2, mit einem Flügelrad-Durchflussmesser, dadurch gekennzeichnet, dass das Durchflussmesser-Gehäuse als stehender Zylinder mit einer seitlichen, im wesentlichen tangentialen Wasserzuführung ausgebildet ist, dessen zum Einsetzen des Messflügels offene Oberseite im montierten Zustand durch das plattenförmige Heizelement verschlossen ist und dass zur Wegfuhr der abgemessenen Wassermenge am Boden des Durchflussmesser-Gehäuses eine Abflussleitung vorgesehen ist.

4. Heizeinrichtung nach Anspruch 3, dadurch gekennzeichnet, dass die Abflussleitung bei in einer Kaffeemaschine montierter Einrichtung direkt über die Filtervorrichtung zu liegen kommt.

5. Heizeinrichtung nach einem der Ansprüche 1-4, dadurch gekennzeichnet, dass der Durchflussmesser mit einer Hall-Sonde arbeitet, wobei die zur Ansteuerung der Hall-Sonde im Flügelrad angebrachten Magnete in den Flügeln, vorzugsweise an den Flügelenden von vorzugsweise mindestens zwei sich gegenüberliegenden Flügeln angeordnet bzw. in diesen integriert sind.

# Fig. 1

# Fig.2

# Fig.3

| | Europäisches Patentamt | **EUROPÄISCHER RECHERCHENBERICHT** | Nummer der Anmeldung |
|---|---|---|---|
| | | | EP 88 11 2405 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 299 839 (MOULINEX S.A.) <br> * Seite 2, Zeile 11 - Seite 3, Zeile 6; Figuren 2-5 * <br> --- | 1,2,5 | A 47 J 31/40 <br> A 47 J 31/54 |
| Y | DE-A-3 306 807 (ROEGI ELEKTROGERÄTE GmbH) <br> * Seite 4, Zeile 7 - Seite 6, zeile 27; Figur 1 * <br> --- | 1,2,5 | |
| Y | FR-A-2 538 103 (GICAR S.A.S.) <br> * Anspruch 1; Figuren 1-5 * <br> ----- | 5 | |
| | | | **RECHERCHIERTE SACHGEBIETE (Int. Cl.4)** <br><br> A 47 J <br> F 24 H <br> G 01 F |

Der vorliegende Recherchenbericht wurde für alle Patentansprüche erstellt

| Recherchenort | Abschlußdatum der Recherche | Prüfer |
|---|---|---|
| DEN HAAG | 14-11-1988 | MEINDERS H. |